# EUROPEAN PATENT APPLICATION

(11) **EP 1 097 844 A2**
(43) Date of publication of application: **09.05.2001**
(21) Application number: 00122726.3
(22) Date of filing: 18.10.2000
(51) Int. Cl.: B60R 1/00, B60R 11/02, B60R 21/01, B60N 2/00, H04N 7/18

(54) **Vehicle rear seat monitoring system**

(30) Priority: 05.11.1999 US 435600
(71) Applicant: TRW INC., Lyndhurst Ohio 44124 (US)
(72) Inventor: Schaffran, Michelle Renee, TRW Inc., Lyndhurst, Ohio 44124 (US)
(74) Representative: Wagner, Karl H., Dipl.-Ing.

(57) **Abstract**

A vehicle (12) has a front seat area (e.g., seat 14) and a rear seat area (e.g., seat 16), wherein the rear seat area is outside of a normal viewing area of a vehicle driver (20) located in the front seat area. A vehicle rear seat area monitoring system (10) includes an electrical image collecting apparatus (34) for collecting real-time imagery of the rear seat area. The system (10) includes an electrical image display apparatus (46) for displaying the real-time imagery for viewing by the vehicle driver (20) within the normal viewing area of the vehicle driver.

## Description

### Technical Field

The present invention is generally directed to a vehicle system for monitoring a portion of a vehicle, and is particularly directed to a system for monitoring a rearward-facing infant seat located on a rear seat of the vehicle.

### Background of the Invention

For safety reasons, it is preferable to use a child restraint seat on a rear (i.e., non-front) seat of a vehicle. However, the use of a rearward facing infant seat (RFIS) on a rear seat poses an issue that an infant located within the RFIS may not be readily visible to a driver of the vehicle.

In one known scenario, the driver must rely upon physical head turning away from a normal driving head orientation (i.e., facing forward and eyes front) in an effort to see the infant. However, it is typically unadvisable for a driver to divert away from the normal driving head orientation.

In another known scenario, a mirror system is employed. However, the image presented to the driver via such a mirror system is often unsatisfactory because of the number of mirror components, the size of the mirror components, the aiming of the mirror components, or the use of curved mirror components (e.g., a convex mirror surface).

Further, physical head-turning or a mirror system may not even be useful. For example, an infant located in a RFIS positioned on a rearmost seat of a minivan may not be viewable using either of the above-mentioned techniques.

### Summary of the Invention

In accordance with one aspect, the present invention provides a vehicle rear seat area monitoring system for a vehicle having a front seat area and a rear seat area. The system includes electrical image collection means for collecting real-time imagery of the rear seat area that is outside of a normal viewing area of a vehicle driver located in the front seat area. The system also includes electrical display means for displaying the real-time imagery for viewing by the vehicle driver within the normal viewing area of the vehicle driver.

### Brief Description of the Drawing

The foregoing and other features and advantages of the present invention will become apparent to those skilled in the art to which the present invention relates upon reading the following description with reference to the accompanying drawing, wherein:

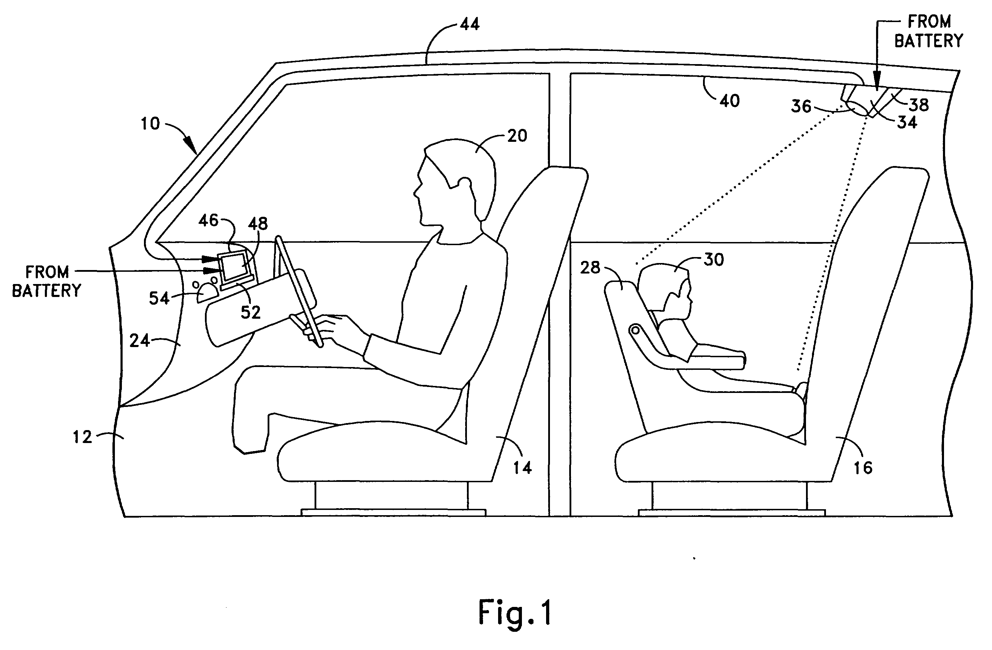

Fig. 1 is a schematic illustration of a vehicle rear seat monitoring system in accordance with the present invention within an associated vehicle.

### Description of Preferred Embodiment

A representation of the present invention is schematically shown in Fig. 1 as a vehicle rear seat area monitoring system 10 within an associated vehicle 12. The vehicle 12 has a front seat 14 and a rear seat 16. It should be noted that the illustrated example shows a single rear seat 16. However, the vehicle 12 may have plural rear seats that may be arranged into a plurality of seating groups. As used herein, "rear seat" is intended to mean a non-front seat. For example, a typical minivan has a two rear (i.e., non-front) seating groups. The two rear seating groups are commonly referred to as a second or middle seating group (i.e., the seats immediately behind the front seating group), and a third or rearmost seating group.

A driver 20 is located on the front seat 14. During normal driving, the driver 20 faces forward (to the left in Fig. 1). The forward facing orientation of the driver 20 allows the driver to comfortably view out the windshield (not shown), and to comfortably view an instrument panel 24 of the vehicle 12. Thus, the view through the windshield and the view of the instrument panel 24 are within a normal viewing area of the driver 20 while the driver is engaged in operation of the vehicle 12.

A rearward facing infant seat (RFIS) 28 is located and secured on the rear seat 16. An infant 30 is located in the RFIS 28. The orientation of the RFIS 28 is such that the infant 30 faces away from the location of the driver 20 (i.e., the infant faces rearward). The RFIS 28 is generally outside the normal viewing area of the driver 20 during the vehicle operation. Further, the infant 30 within the RFIS 28 is outside the normal viewing area of the driver 20 during the vehicle operation.

The system 10 includes an electrical image collecting apparatus 34 that collects a real-time image and outputs an electrical signal that conveys the collected, real-time image. The image collecting apparatus 34 may be a video camera or an image processing chip. A battery (not shown) of the vehicle 12 supplies electrical energy for the image collecting apparatus 34.

Suitable image gathering/focusing elements 36, such as lenses, are provided as part of the image collecting apparatus 34. The image gathering/focusing elements 36 may include a wide-angle lens (e.g., a parabolic lens) such that an image of a relatively large area is gathered. A mount arrangement 38 connects the image collecting apparatus 34 to an interior portion (e.g., at a headliner) 40 of the vehicle 12.

The image collecting apparatus 34 is aimed at the rear seat area. Specifically, the image collecting apparatus 34 is aimed at the rear seat 16 upon which the RFIS 28 is located.

Preferably, the mount arrangement 38 is located at the headliner 40 of the vehicle 12, such that the mount arrangement and the image collecting apparatus 34 are above (i.e., overhead) the rear seat area and the RFIS 28. Thus, the image collecting apparatus 34 is aimed along a downward direction to view into the RFIS 28 and to view the infant 30. Further, the mount arrangement 38 and the image collecting apparatus 34 are preferably located rearward (i.e., to the right as viewed in Fig. 1) of the rear seat area and the RFIS 28. Thus, the image collecting apparatus 34 is aimed along a forward direction to view into the RFIS 28 and to view the face of the infant 30.

An electrical cable 44 extends from the output of the image collecting apparatus 34 to an input of an electrical image display apparatus 46. The vehicle battery powers the display apparatus 46 with electrical energy. Preferably, the display apparatus 46 includes a video monitor 48, such as a liquid crystal display video monitor. A real-time image of the rear seat area, and specifically an image of the RFIS 28 and the infant 30, is provided on a screen of the video monitor 48.

A mounting arrangement 52 for the display apparatus 46 holds the display apparatus such that the video monitor 48 of the display apparatus is within or near to the normal field of view of the driver 20 during vehicle operation (i.e., at the front seat area). Preferably, the mounting arrangement 52 is located such that the display apparatus 46 is within the instrument panel 24. The location of the display apparatus 46 is such that the video monitor 48 is adjacent to gauges 54 of the vehicle 12.

It is to be appreciated that the display apparatus 46 can be located at some other portion of the vehicle 12 within the normal viewing area of the driver 20. Examples of such other vehicle portions within the normal viewing area of the driver 20 include at or near a vehicle side mirror (not shown), and at or near a vehicle rear view mirror (not shown).

From the above description of the invention, those skilled in the art will perceive improvements, changes and modifications. Such improvements, changes and modifications within the skill of the art are intended to be covered by the appended claims.

## Claims

1. A vehicle rear seat area monitoring system for a vehicle having a front seat area and a rear seat area, said system comprising:
electrical image collection means for collecting real-time imagery of the rear seat area that is outside of a normal viewing area of a vehicle driver located in the front seat area; and
electrical display means for displaying the real-time imagery for viewing by the vehicle driver within the normal viewing area of the vehicle driver.

2. A system as set forth in claim 1, including means for mounting said image collection means at a position with the vehicle to view into a rearward facing infant seat located on a seat within the rear seat area.

3. A system as set forth in claim 2, including means for mounting said image collection means at an overhead area of the vehicle.

4. A system as set forth in claim 1, wherein said display means is located on an instrument panel of the vehicle.

5. A system as set forth in claim 1, wherein said image collection means includes a camera.

6. A system as set forth in claim 1, wherein said image collection means includes an image processing chip.

7. A system as set forth in claim 1, wherein said image collection means includes a lens arrangement for providing a wide field of view.
